# EUROPEAN PATENT APPLICATION

(11) **EP 2 469 918 A1**
(43) Date of publication of application: **27.06.2012**
(21) Application number: 10810015.7
(22) Date of filing: 13.08.2010
(51) Int. Cl.: H04W 28/06, G08G 1/095, H04W 4/04

(54) **COMMUNICATION APPARATUS, COMMUNICATION SYSTEM AND COMMUNICATION METHOD**

(30) Priority: 19.08.2009 JP 2009190096
(71) Applicant: NEC Corporation, Tokyo 108-8001 (JP)
(72) Inventor: SAKATA, Masayuki, Tokyo 108-8001 (JP); AMINAKA, Hiroaki, Tokyo 108-8001 (JP)
(74) Representative: Betten & Resch
(86) International application number: PCT/JP2010/064034
(87) International publication number: WO 2011/021674

(57) **Abstract**

A communication device capable of maintaining service quality and reducing an amount of communication simultaneously when updated information is transmitted is provided.

A communication device 1 according to the present invention includes a communication unit 2 for transmitting updated broadcast information, an adjustment unit 3 for adjusting an information amount of the broadcast information at a predetermined timing with priority on a part different from the broadcast information that has already been transmitted, and a control unit 4 for transmitting the broadcast information whose information amount has been adjusted at the predetermined timing via the communication unit 2.

## Description

### Technical field

The present invention relates to a technology with which a communication device transmits updated data to a destination device.

### Background art

As described in patent document 1, in the ITS (Intelligent Transport Systems), road-vehicle communication in which information is transmitted and received between a base station (wireless communication device) and an in-vehicle wireless communication device is performed by using wireless communication. For example, in the VICS (Vehicle Information and Communication System), the in-vehicle wireless communication device downloads accident information and congestion information from the base station in an infrastructure side and periodically updates them.

### Prior art document

### Patent document

Patent document 1: Japanese Patent Publication No. 3673830
Patent document 2: Japanese Patent Application Laid-Open No. 1998-198607

### Brief summary of the invention

### Problems to be solved by the invention

However, in the system described in patent document 1, it is difficult to maintain service quality and to reduce an amount of communication simultaneously.

In the technology described in patent document 1, the base station (wireless communication device) periodically transmits data. However, when the base station periodically transmits the data, if the number of vehicles increases, the frequency of the data transmission increases, or the data amount increases, the amount of communication in the whole communication system increases. When the amount of communication increases, a communication band is compressed and whereby, there is a risk in which data transmission and data reception fail.

On the other hand, as a technology for reducing the amount of communication, a technology with which when second data is transmitted, only a difference between the first data that has already been transmitted and the second data is transmitted is disclosed in patent document 2. However, when the transmission and reception of the second data fails due to the deterioration of the communication environment or the like, misalignment of data occurs and whereby, the service quality is degraded.

An object of the present invention is to provide a communication device capable of maintaining service quality and reducing an amount of communication simultaneously when updated data is transmitted.

### Means for solving the problems

In order to achieve the above-mentioned object, a communication device according to the present invention includes a communication unit for transmitting updated broadcast information, an adjustment unit for adjusting an information amount of the broadcast information at a predetermined timing with priority on a part different from the broadcast information that has already been transmitted, and a control unit for transmitting the broadcast information whose information amount has been adjusted at the predetermined timing via the communication unit.

Further, in order to achieve the above-mentioned object, a communication system according to the present invention includes a first communication device which transmits updated broadcast information, adjusts an information amount of the broadcast information at a predetermined timing with priority on a part different from the broadcast information that has already been transmitted, and transmits the broadcast information whose information amount has been adjusted at the predetermined timing and a second communication device which receives the broadcast information from the first communication device.

Furthermore, in order to achieve the above-mentioned object, a communication method according to the present invention includes transmitting updated broadcast information, adjusting an information amount of the broadcast information at a predetermined timing with priority on a part different from the broadcast information that has already been transmitted, and transmitting the broadcast information whose information amount has been adjusted at the predetermined timing.

### Advantage of the invention

By using the present invention, the communication device adjusts the information amount of the broadcast information at the predetermined timing with priority on a part different from the broadcast information that has already been transmitted and transmits the broadcast information whose information amount has been adjusted at the predetermined timing.

The service quality can be maintained because the part different from the broadcast information that has already been transmitted is preferentially transmitted. On the other hand, information that is the same as the broadcast information that has already been transmitted is deleted and whereby, the amount of communication can be reduced. Accordingly, the communication device capable of maintaining the service quality and reducing the amount of communication simultaneously can be provided.

### Brief description of the drawings

[Fig. 1] Fig. 1 is an example of a block configuration diagram of a communication device according to a first exemplary embodiment of the present invention.
[Fig. 2] Fig. 2 is an example of a system configuration diagram of a communication system according to a second exemplary embodiment of the present invention.
[Fig. 3] Fig. 3 is an example of a block configuration diagram of a communication device according to a second exemplary embodiment of the present invention.
[Fig. 4] Fig. 4 is a flowchart showing an example of operation of a communication system according to a second exemplary embodiment of the present invention.
[Fig. 5] Fig. 5 is an example of a system configuration diagram of a wireless communication system according to a third exemplary embodiment of the present invention.
[Fig. 6] Fig. 6 is a figure showing an example of information included in a data acquisition request according to a third exemplary embodiment of the present invention.
[Fig. 7] Fig. 7 is a figure showing an example of information included in download data according to a third exemplary embodiment of the present invention.
[Fig. 8A] Fig. 8A is a figure showing an example of information included in download data according to a third exemplary embodiment of the present invention.
[Fig. 8B] Fig. 8B is a figure showing an example of information included in download data according to a third exemplary embodiment of the present invention.
[Fig. 9] Fig. 9 is a flowchart showing an example of operation of a roadside machine according to a third exemplary embodiment of the present invention.
[Fig. 10] Fig. 10 is a flowchart showing an example of all data transmission process according to a third exemplary embodiment of the present invention.
[Fig. 11] Fig. 11 is a flowchart showing an example of difference data transmission process according to a third exemplary embodiment of the present invention.
[Fig. 12] Fig. 12 is a flowchart showing an example of operation of an in-vehicle communication device according to a third exemplary embodiment of the present invention.
[Fig. 13] Fig. 13 is a sequence diagram showing an example of operation of a wireless communication system according to a third exemplary embodiment of the present invention.
[Fig. 14] Fig. 14 is an example of a system configuration diagram of a wireless communication system according to a fourth exemplary embodiment of the present invention.
[Fig. 15A] Fig. 15A is a figure showing an example of information included in an upload request according to a fourth exemplary embodiment of the present invention.
[Fig. 15B] Fig. 15B is a figure showing an example of information included in upload data according to a fourth exemplary embodiment of the present invention.
[Fig. 16] Fig. 16 is a sequence diagram showing an example of operation of a wireless communication system according to a fourth exemplary embodiment of the present invention.
[Fig. 17] Fig. 17 is an example of a system configuration diagram of a wireless communication system according to a fifth exemplary embodiment of the present invention.
[Fig. 18] Fig. 18 is a flowchart showing an example of operation of a roadside machine according to a fifth exemplary embodiment of the present invention.
[Fig. 19] Fig. 19 is a flowchart showing an example of operation of an in-vehicle communication device according to a fifth exemplary embodiment of the present invention.
[Fig. 20] Fig. 20 is a sequence diagram showing an example of operation of a wireless communication system according to a fifth exemplary embodiment of the present invention.
[Fig. 21] Fig. 21 is a sequence diagram showing an example of operation of a wireless communication system that is changed from a fifth exemplary embodiment of the present invention.

### Mode for carrying out the invention

### (First exemplary embodiment)

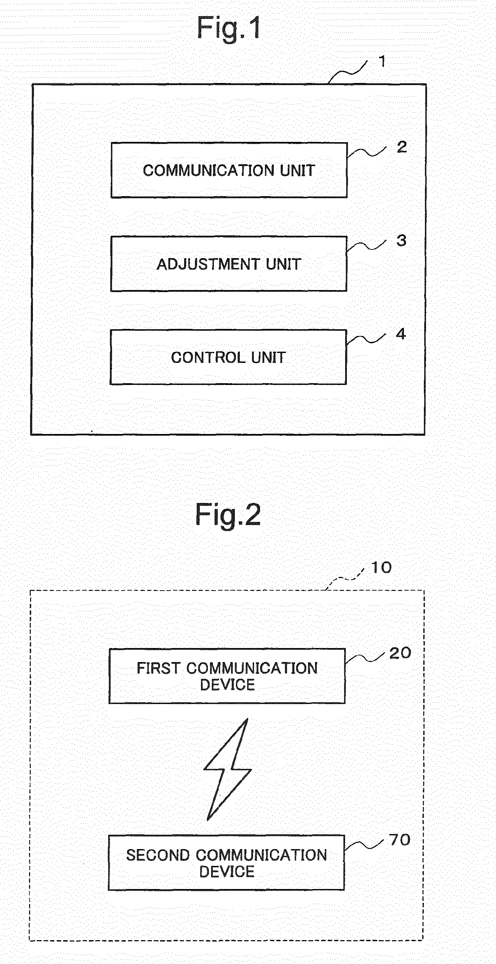

A first exemplary embodiment of the present invention will be described. An example of a block configuration diagram of a communication device according to the exemplary embodiment is shown in Fig. 1. In Fig. 1, a communication device 1 includes a communication unit 2, an adjustment unit 3, and a control unit 4.

The communication unit 2 transmits updated broadcast information. The adjustment unit 3 adjusts an information amount of the broadcast information at a predetermined timing with priority on a part different from the broadcast information that has already been transmitted. The control unit 4 transmits the broadcast information whose information amount has been adjusted at the predetermined timing via the communication unit 2.

When the adjustment unit 3 adjusts the information amount of the broadcast information at the predetermined timing with priority on the part different from the broadcast information that has already been transmitted and performs transmission, quality of service can be maintained. On the other hand, when the adjustment unit 3 deletes information that is the same as the broadcast information that has already been transmitted, the amount of communication can be reduced. Therefore, the communication device 1 can maintain the service quality and reduce the amount of communication simultaneously.

### (Second exemplary embodiment)

A second exemplary embodiment of the present invention will be described. An example of a system configuration diagram of a communication system according to the exemplary embodiment is shown in Fig. 2. In Fig. 2, a communication system 10 includes a first communication device 20 and a second communication device 70. In the exemplary embodiment, the first communication device 20 transmits and receives information to and from the second communication device 70 by wireless communication such as infrared communication or the like.

When the first communication device 20 receives a transmission request from the second communication device 70, it transmits the broadcast information to the second communication device 70.

The second communication device 70 generates the transmission request for the broadcast information including an index value at a predetermined timing and transmits it to the first communication device 20. The second communication device 70 receives the broadcast information from the first communication device 20 and processes it. In this exemplary embodiment, when the second communication device 70 enters in an area in which it can communicate with the first communication device 20, the second communication device 70 transmits the transmission request including the index value to the first communication device 20.

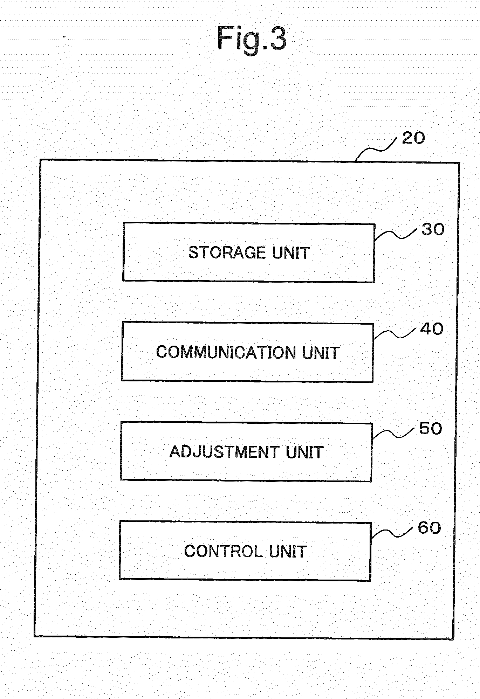

The first communication device 20 will be described in detail. An example of a block configuration diagram of the first communication device 20 is shown in Fig. 3. In Fig. 3, the first communication device 20 includes a storage unit 30, a communication unit 40, an adjustment unit 50, and a control unit 60.

The updated broadcast information is stored in the storage unit 30. In this exemplary embodiment, the broadcast information stored in the storage unit 30 is periodically updated.

The communication unit 40 transmits and receives various information to and from the second communication device 70. In the exemplary embodiment, the communication unit 40 transmits and receives various information to and from the second communication device 70 by using infrared ray.

The adjustment unit 50 adjusts the information amount of the broadcast information at the predetermined timing with priority on a part different from the broadcast information that has already been transmitted. In the exemplary embodiment, the adjustment unit 50 adjusts the information amount based on the index value received from the second communication device 70.

When the control unit 60 receives the transmission request from the second communication device 70, it determines whether or not the broadcast information has already been transmitted to the second communication device 70. When the broadcast information has not been transmitted to the second communication device 70, the broadcast information stored in the storage unit 30 is transmitted to the second communication device 70 without any change. On the other hand, when the broadcast information has already been transmitted to the second communication device 70, the information amount of the broadcast information stored in the storage unit 30 is adjusted by the adjustment unit 50 and the broadcast information whose information amount has been adjusted is transmitted to the second communication device 70.

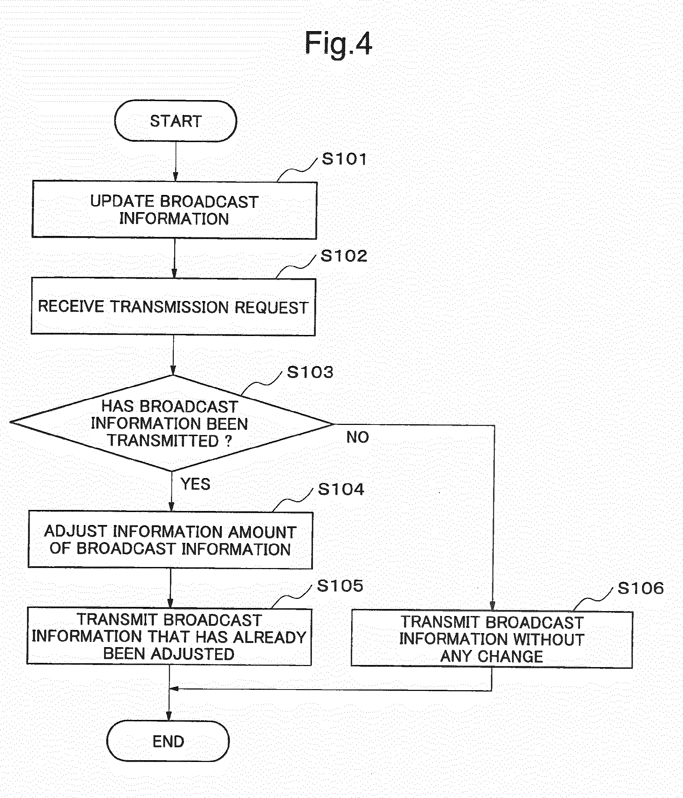

A flowchart showing an example of the operation of the first communication device 20 according to the exemplary embodiment is shown in Fig. 4. As shown in Fig. 4, in the storage unit 30 of the first communication device 20, the broadcast information is periodically updated (S101). When the communication unit 40 of the first communication device 20 receives the transmission request from the second communication device 70 (S102), the control unit 60 determines whether or not the broadcast information has already been transmitted to the second communication device 70 (S103). When the broadcast information has not been transmitted to the second communication device 70 (NO in S103), the broadcast information stored in the storage unit 30 is transmitted to the second communication device 70 without any change (S106). On the other hand, when the broadcast information has already been transmitted to the second communication device 70 (YES in S103), the broadcast information stored in the storage unit 30 is outputted to the adjustment unit 50. The adjustment unit 50 adjusts the information amount of the received broadcast information with priority on the part different from the broadcast information that has already been transmitted and outputs it to the control unit 60 (S104). The control unit 60 transmits the received broadcast information which has been adjusted to the second communication device 70 (S105).

In S104, the adjustment unit 50 adjusts the information amount based on the index value received from the second communication device 70. For example, when the broadcast information that has already been transmitted is (A1, B1, C1, D1, E1, F1) and the broadcast information at the predetermined timing is (A1, B2, C2, D1, E2, F1), the adjustment unit 50 adjusts the information amount as follows. According to the index value, the information amount of the broadcast information at the predetermined timing is adjusted as follows: (A1, B2, C2, E2, F1) -> (A1, B2, C2, E2) -> (B2, C2, E2) -> (B2, E2) -> (B2).

As described above, the communication system 10 according to the exemplary embodiment can transmit the broadcast information whose information amount is optimally adjusted by adjusting the information amount based on the index value that is received from the second communication device 70 by the adjustment unit 50. Therefore, maintenance of the service quality and reduction of the amount of communication can be realized in a balanced manner.

### (Third exemplary embodiment)

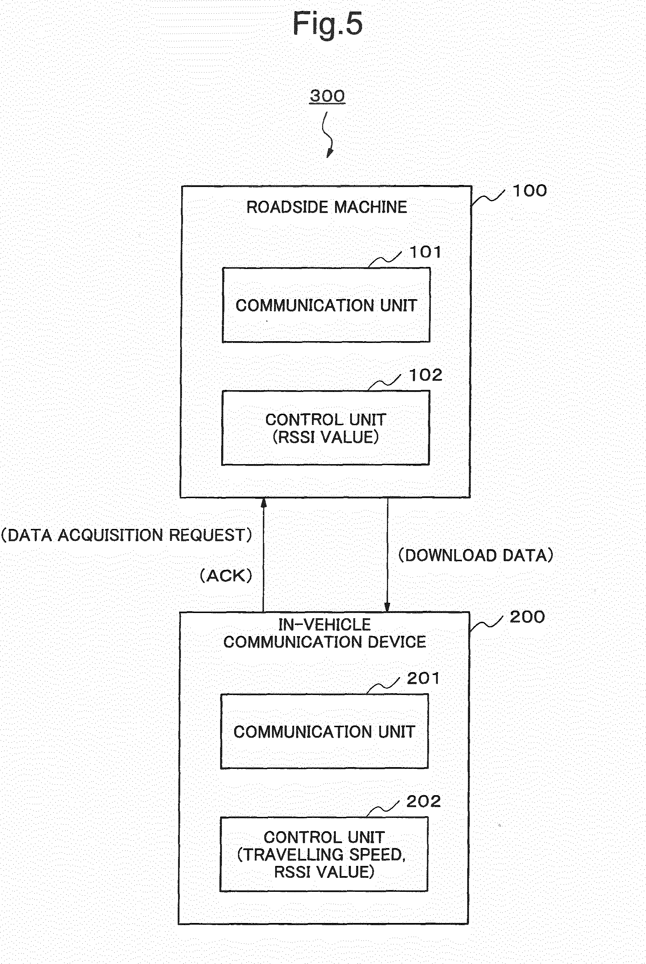

A third exemplary embodiment of the present invention will be described. Fig. 5 is an example of a system configuration diagram of a wireless communication system 300 according to the exemplary embodiment. The wireless communication system 300 is for example, a communication system used for the VICS. In Fig. 5, the wireless communication system 300 includes a roadside machine 100 and an in-vehicle communication device 200.

In the VICS, a server (not shown) for outputting accident information and congestion information to the roadside machine 100 is provided. The roadside machine 100 transmits the accident information and the congestion information received from the server to the in-vehicle communication device 200.

Further, in the exemplary embodiment, although one roadside machine 100 and one in-vehicle communication device 200 are used, a plurality of roadside machines 100 and a plurality of in-vehicle communication devices 200 can be used.

In Fig. 5, the roadside machine 100 includes a communication unit 101 and a control unit 102. The communication unit 101 transmits and receives data to and from the in-vehicle communication device 200. When the communication unit 101 receives a data acquisition request from the in-vehicle communication device 200, it transmits download data to the in-vehicle communication device 200 in response to the data acquisition request. The communication unit 101 receives an ACK (ACKnowledgement) from the in-vehicle communication device 200.

Here, the data acquisition request is information for requesting transmission of the download data to the roadside machine 100 by the in-vehicle communication device 200. The ACK is information to notify the roadside machine 100 of information indicating that the in-vehicle communication device 200 succeeds in the reception of the download data.

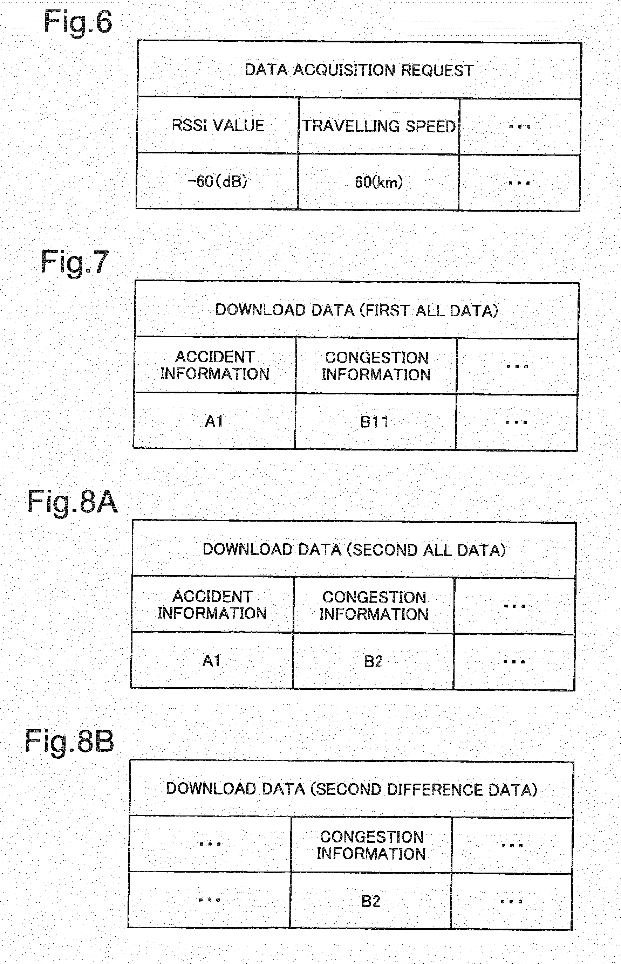

An example of information included in the data acquisition request is shown in Fig. 6. In Fig. 6, the data acquisition request includes the index value such as "RSSI value", "travelling speed", and the like. The "RSSI value" is a measured value of a received signal strength in the reception of the download data that is measured by the in-vehicle communication device 200. A unit of the RSSI value is for example, "dB (decibel)". The "travelling speed" is a travelling speed of a vehicle on which the in-vehicle communication device 200 is mounted. A unit of the "travelling speed" is for example, "km/h".

An example of the information included in the download data is shown in Fig. 7. In Fig. 7, the download data includes the "accident information", the "congestion information" and the like. The "accident information" is information for specifying a road on which an accident occurs. The "congestion information" is information for specifying a road on which a traffic jam occurs.

In Fig. 5, when the control unit 102 receives the data acquisition request via the communication unit 101, it acquires the download data. The control unit 102 acquires the download data by receiving it from another server which intensively manages the VICS. Alternatively, the control unit 102 acquires it by creating the download data based on the data held by the control unit 102 and the data received by the communication unit 101.

Further, the control unit 102 determines whether or not the ACK has been received from the in-vehicle communication device 200 that is a transmission source of the data acquisition request.

When the ACK has not been received from the in-vehicle communication device 200, the control unit 102 transmits the download data to be transmitted to the in-vehicle communication device 200 without any change. On the other hand, when the ACK has been received from the in-vehicle communication device 200, the control unit 102 determines the data to be transmitted: either the download data that is transmitted according to the index value about communication without any change or the data of the difference of the download data. Hereinafter, a process in which the download data to be transmitted is transmitted without any change is described as "all data transmission process". Further, a process in which the data of the difference between the download data that has already been transmitted and the download data that will be transmitted is transmitted is described as "difference data transmission process".

In the exemplary embodiment, the control unit 102 determines the data to be transmitted: either the download data that is transmitted without any change or the data of the difference of the download data, based on the following three conditions.

A first condition is that the RSSI value measured by the roadside machine 100 is lower than a predetermined threshold value (for example, -80 dB). Here, the RSSI value measured by the roadside machine 100 is the strength of the signal in which the data acquisition request received from the in-vehicle communication device 200 or the ACK is included. Here, the roadside machine 100 measures the RSSI value a plurality of times and can use the latest RSSI value or a statistical amount (an average value or the like) of the RSSI values in a predetermined period. The RSSI value is not limited to the RSSI value of the signal in which the data acquisition request or the ACK is included. For example, the RSSI value of a beacon signal periodically transmitted from the in-vehicle communication device 200 can be used if it is a signal received from the in-vehicle communication device 200.

A second condition is that the RSSI value measured by the in-vehicle communication device 200 is lower than the predetermined threshold value (for example, -80 dB).

A third condition is that the travelling speed of the in-vehicle communication device 200 is greater than the predetermined threshold value (for example, 30 km/h).

Here, the different threshold value can be used for the first condition and the second condition with respect to the RSSI value. For example, a value which changes over a time can be used for the threshold value instead of the fixed value. Further, in the exemplary embodiment, although the roadside machine 100 determines all three conditions, it may determine any one of three conditions.

Furthermore, although the travelling speed and the RSSI value are used as the index value, another index value may be used if it is the index value about communication.

When any one of three conditions is satisfied, the control unit 102 performs the difference data transmission process. On the other hand, when all three conditions are not satisfied, the control unit 102 performs the all data transmission process.

Here, the data of the difference is not a difference of the data itself. It is data including only information indicating a value after the change with respect to an item indicating a value which is changed compared to the value of the last time.

An example of the download data to which the all data transmission process is performed is shown in Fig. 8A and an example of the download data to which the difference data transmission process is performed is shown in Fig. 8B.

In comparison with Fig. 7 showing the example of the first download data, in Fig. 8A, the accident information and the congestion information are included. On the other hand, in Fig. 8B, only the congestion information which is the difference from the first download data is included.

A configuration of the in-vehicle communication device 200 is described with reference to Fig. 5. The in-vehicle communication device 200 is mounted on the vehicle and wirelessly communicates with the roadside machine 100 when the vehicle is travelling. For example, the in-vehicle communication device 200 operates as a client in the VICS.

In Fig. 5, the in-vehicle communication device 200 includes a communication unit 201 and a control unit 202. The communication unit 201 transmits the data acquisition request to the roadside machine 100. The communication unit 201 receives the download data from the roadside machine 100. When the communication unit 201 succeeds in the reception of the download data, it transmits the ACK to the roadside machine 100.

The control unit 202 acquires the travelling speed of the vehicle on which the in-vehicle communication device 200 is mounted. For example, the control unit 202 measures the travelling speed of the vehicle by using a vehicle speed sensor mounted on the in-vehicle communication device 200 or receives the travelling speed from another device.

Additionally, the control unit 202 measures the RSSI value of the signal received from the roadside machine 100.

When the control unit 202 acquires the download data, it creates the data acquisition request including the measured travelling speed and the RSSI value. In the exemplary embodiment, the control unit 202 periodically creates the data acquisition request. Further, the data acquisition request may be created when a user operation is performed or when an application to process the download data is activated.

The control unit 202 transmits the created data acquisition request to the roadside machine 100 via the communication unit 201.

Next, operation of the roadside machine 100, the in-vehicle communication device 200, and the system wireless communication system 300 will be described. First, the operation of the roadside machine 100 will be described.

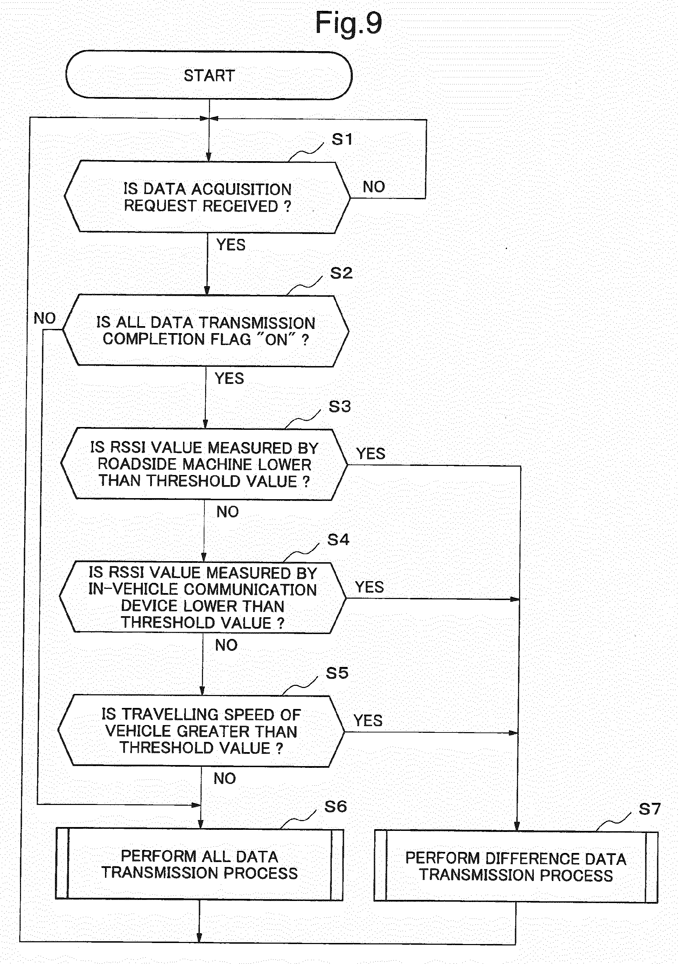

Fig. 9 shows a flowchart showing an example of the operation of the roadside machine 100. In Fig. 9, the roadside machine 100 determines whether or not the data acquisition request is received from the in-vehicle communication device 200 (step S1). When the data acquisition request is received (step S1: YES), the roadside machine 100 determines whether or not all data transmission completion flag is "ON" (step S2).

Here, when the roadside machine 100 succeeds in the transmission of the download data to which the all data transmission process has been performed to the in-vehicle communication device 200, the all data transmission completion flag is set to "ON". In an initial state, it is "OFF" and when the ACK is received with respect to the transmission of the download data to which the all data transmission process is performed, it is set to "ON".

When the all data transmission completion flag is "ON" (step S2: YES), the roadside machine 100 determines whether or not the RSSI value measured by the roadside machine 100 is lower than the threshold value (step S3).

When the RSSI value measured by the roadside machine 100 is equal to or greater than the threshold value in step S3 (step S3: NO), the roadside machine 100 determines whether or not the RSSI value measured by the in-vehicle communication device 200 is lower than the threshold value (step S4).

When the RSSI value measured by the in-vehicle communication device 200 is equal to or greater than the threshold value in step S4 (step S4: No), the roadside machine 100 determines whether or not the travelling speed of the vehicle is greater than the threshold value (step S5).

When the all data transmission completion flag is "OFF" (step S2: NO) or when the travelling speed is lower than or equal to the threshold value (step S5: NO), the roadside machine 100 performs the all data transmission process (step S6).

On the other hand, when the RSSI value measured by the roadside machine 100 is lower than the threshold value (step S3: YES), when the RSSI value measured by the in-vehicle communication device 200 is lower than the threshold value (step S4: YES), or when the travelling speed is greater than the threshold value (step S5: YES), the roadside machine 100 performs the difference data transmission process (step S7).

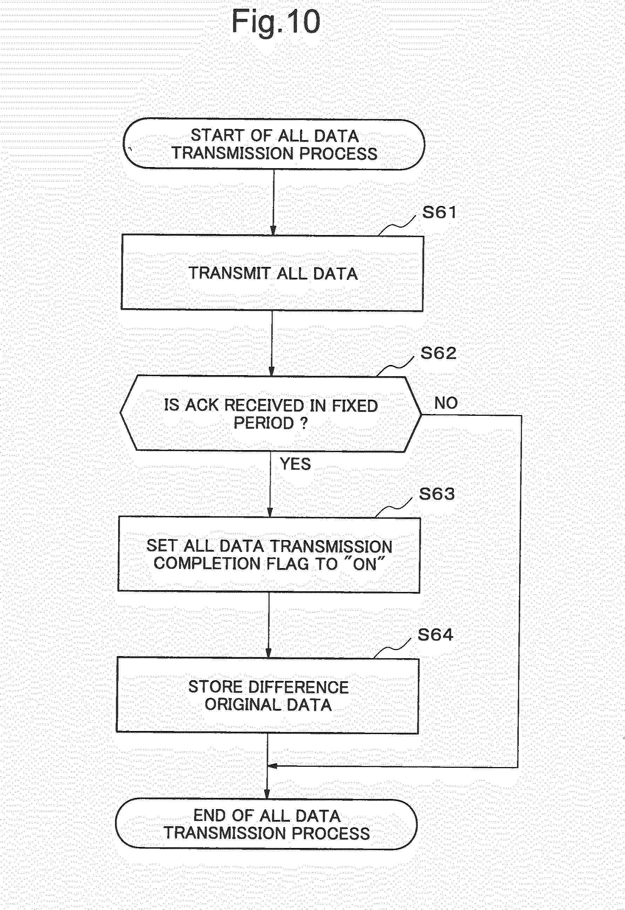

Fig. 10 is a flowchart showing the all data transmission process. The roadside machine 100 transmits the download data including all the data (step S61).

The roadside machine 100 determines whether or not the ACK is received in a fixed period after the download data has been transmitted (step S62).

When the ACK is received in the fixed period (step S62: YES), the roadside machine 100 sets the all data transmission completion flag to "ON" (Step S63). The roadside machine 100 stores the transmitted download data as difference original data (step S64).

When the ACK is not received in the fixed period (step S62: NO) or after the process of step S64, the roadside machine 100 ends the all data transmission process.

Further, in Fig. 10, the roadside machine 100 ends the all data transmission process when the ACK is not received. However, the data transmission may be repeated a plurality of times until the ACK is received.

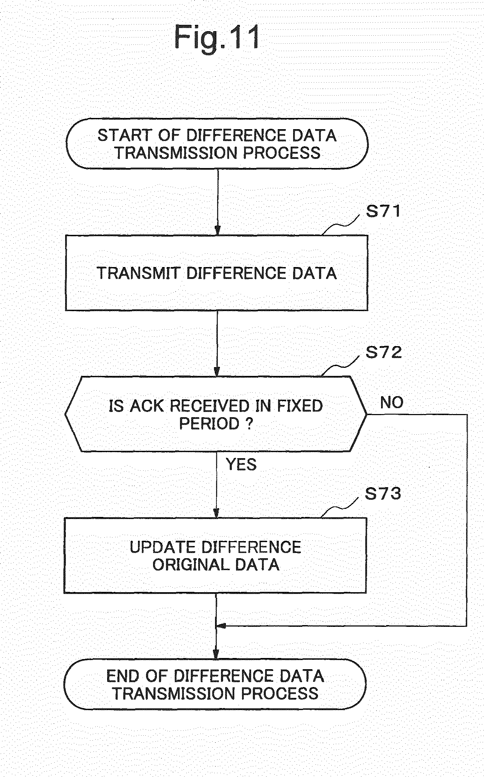

Fig. 11 is a flowchart showing the difference data transmission process. The roadside machine 100 transmits the download data including only the data of the difference between the data that will be transmitted this time and the difference original data (step S71).

The roadside machine 100 determines whether or not the ACK is received in the fixed period after the download data has been transmitted (step S72).

When the ACK is received in the fixed period (step S72: YES), the roadside machine 100 updates the difference original data based on the transmitted download data (step S73).

When the ACK is not received in the fixed period (step S72: NO) or after the process of step S73, the roadside machine 100 ends the difference data transmission process.

Further, when the roadside machine 100 does not receive the ACK after transmitting the data one time, it may repeat the data transmission a plurality of times until the ACK will be received although the difference data transmission process has been ended.

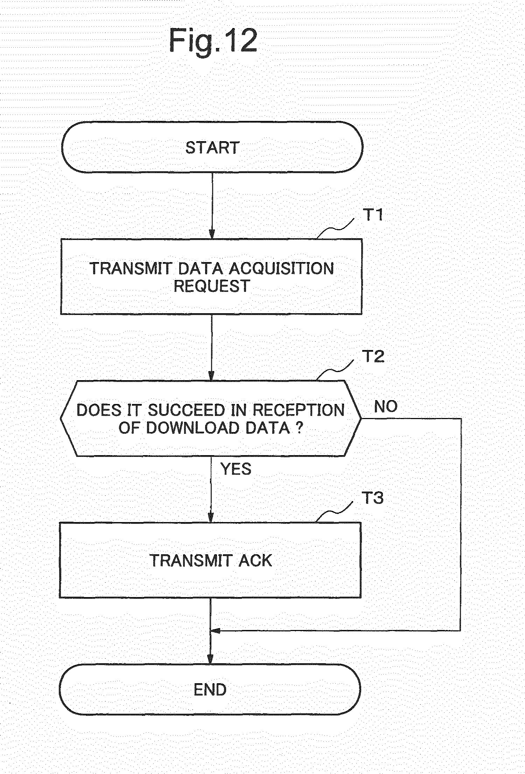

Next, operation of the in-vehicle communication device 200 will be described. Fig. 12 is a flowchart showing an example of the operation of the in-vehicle communication device 200. This operation starts when the in-vehicle communication device 200 receives the download data. For example, this operation starts when a time to receive the download data has come, when the user performs an operation to receive the download data, or when the application to process the download data is activated.

The in-vehicle communication device 200 transmits the data acquisition request including the measured RSSI value and the travelling speed to the roadside machine 100 (step T1).

The in-vehicle communication device 200 determines whether or not it succeeds in the reception of the download data from the roadside machine 100 in the fixed period after transmitting the data acquisition request (step T2).

When the in-vehicle communication device 200 succeeds in the reception of the download data in the fixed period (step T2: YES), it transmits the ACK to the roadside machine 100 (step T3).

When the in-vehicle communication device 200 fails to receive the download data (step T2: NO or after the process of step T3), it ends the operation.

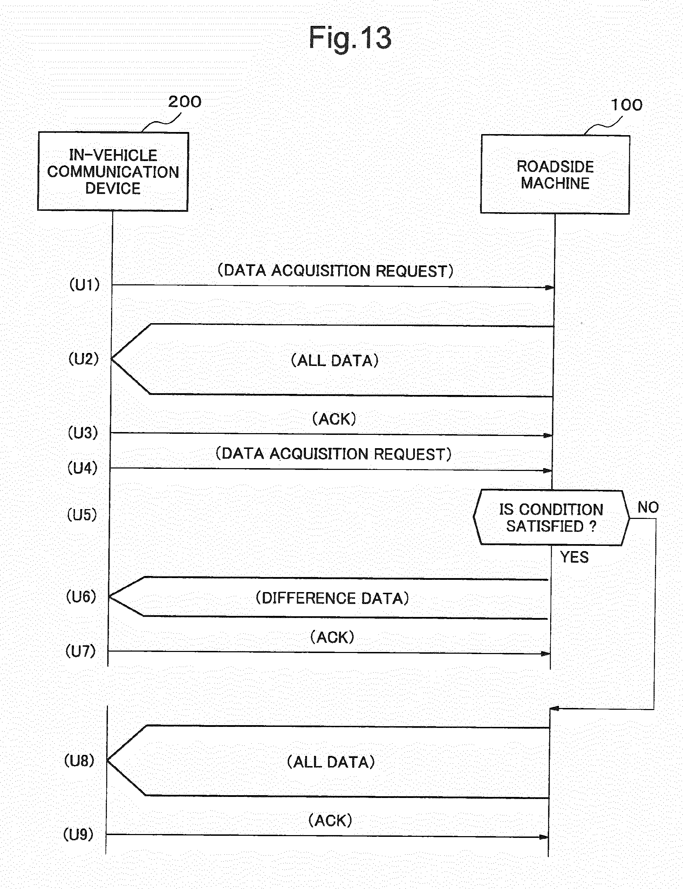

Further, the operation of the wireless communication system 300 will be described. A sequence diagram showing an example of the operation of the wireless communication system 300 is shown in Fig. 13.

The in-vehicle communication device 200 transmits a first data acquisition request to the roadside machine 100 (step U1). The roadside machine 100 transmits the download data to the in-vehicle communication device 200 (step U2). When the in-vehicle communication device 200 succeeds in the reception of the download data, it transmits the ACK to the roadside machine 100 (step U3).

Further, the in-vehicle communication device 200 transmits a second data acquisition request (step U4).

The roadside machine 100 determines whether or not the condition is satisfied with respect to the above-mentioned three conditions (step U5). When any one of the three conditions is satisfied (step U5: YES), the roadside machine 100 performs the difference data transmission process (step U6). When the in-vehicle communication device 200 succeeds in the reception of the download data, it transmits the ACK to the roadside machine 100 (step U7).

On the other hand, when all the three conditions are not satisfied (step U5: NO), the roadside machine 100 performs the all data transmission process (step U8). When the in-vehicle communication device 200 succeeds in the reception of the download data, it transmits the ACK to the roadside machine 100 (step U9).

Further, in the exemplary embodiment, the roadside machine 100 transmits the download data in response to the data acquisition request. However, the roadside machine 100 may transmit the download data periodically.

In the exemplary embodiment, the roadside machine 100 performs either the difference data transmission process or the all data transmission process. However, it is not limited to this. A method in which a plurality of steps are set to the data amount of the difference data, and the roadside machine 100 selects any one of the data amounts according to the RSSI value and the travelling speed and transmits the download data may be used.

As described above, the roadside machine 100 changes the data amount according to the index value about communication and transmits the data. Therefore, a balance between the communication quality and the data amount can be achieved and maintenance of the service quality and reduction of the data amount can be realized simultaneously.

To be more specific, when the communication quality is relatively low, the data amount is reduced by transmitting the difference data. On the other hand, when the travelling speed is smaller than or equal to the threshold value and the RSSI value is equal to or greater than the threshold value, in other words, when the communication quality is relatively high, all the data is transmitted.

For this reason, even if the transmission or the reception of the difference data fails and whereby, misalignment of data occurs, the misalignment can be corrected by transmitting and receiving all the data after that. Namely, the wireless communication system can maintain the service quality.

### (Fourth exemplary embodiment)

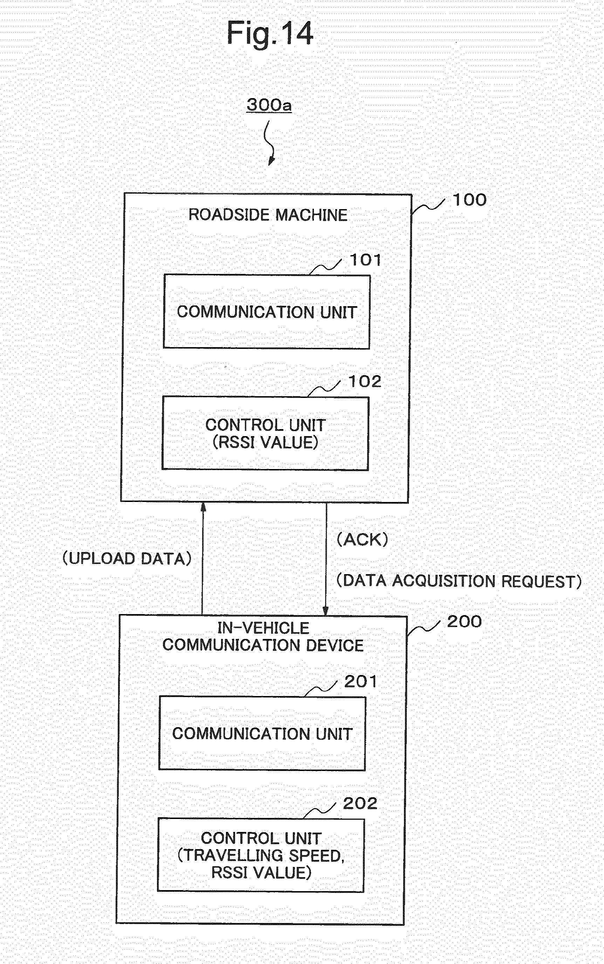

A fourth exemplary embodiment of the present invention will be described. An example of a system configuration diagram of a wireless communication system according to the exemplary embodiment is shown in Fig. 14. In the exemplary embodiment, the in-vehicle communication device 200 transmits upload data to the roadside machine 100. Hereinafter, the difference between the third exemplary embodiment and this exemplary embodiment will be mainly described.

The roadside machine 100 transmits the data acquisition request, periodically or when it receives a request for the upload data from another communication device. The roadside machine 100 includes the RSSI value measured by the roadside machine 100 in the data acquisition request.

The in-vehicle communication device 200 transmits the upload data to the roadside machine 100 in response to the data acquisition request. In the second and subsequent upload data transmissions, the in-vehicle communication device 200 determines the three conditions explained in the third exemplary embodiment. When any one of the three conditions is satisfied, the in-vehicle communication device 200 performs the difference data transmission process. On the other hand, when all the three conditions are not satisfied, the in-vehicle communication device 200 performs the all data transmission process.

When the roadside machine 100 succeeds in the reception of the upload data, it transmits the ACK to the in-vehicle communication device 200.

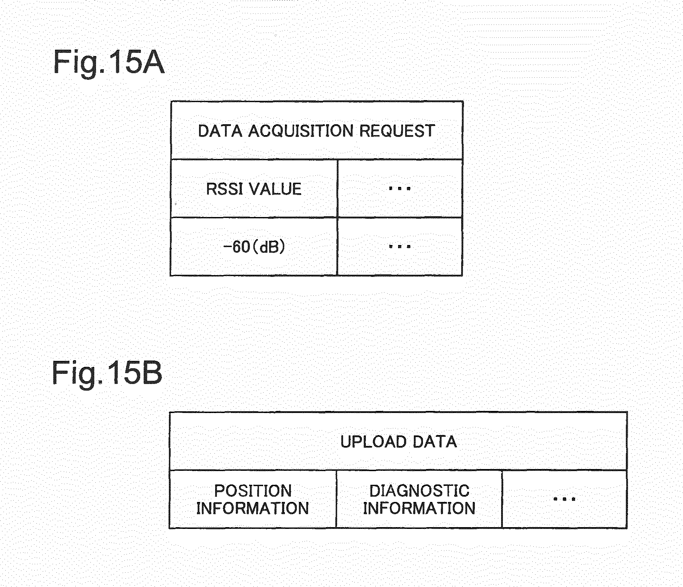

An example of information included in the data acquisition request is shown in Fig. 15A and an example of information included in the upload data is shown in Fig. 15B. In Fig. 15A, the "RSSI value" measured by the roadside machine 100 is included in the data acquisition request. In Fig. 15B, the "position information", "diagnostic information", and the like are included in the upload data.

The "position information" is information indicating a current position of the vehicle. For example, the position information is acquired by using the GPS (Global Positioning System) mounted on the vehicle. The "diagnostic information" is information indicating a diagnosis of a state in the vehicle (the number of passengers in the bus or the like).

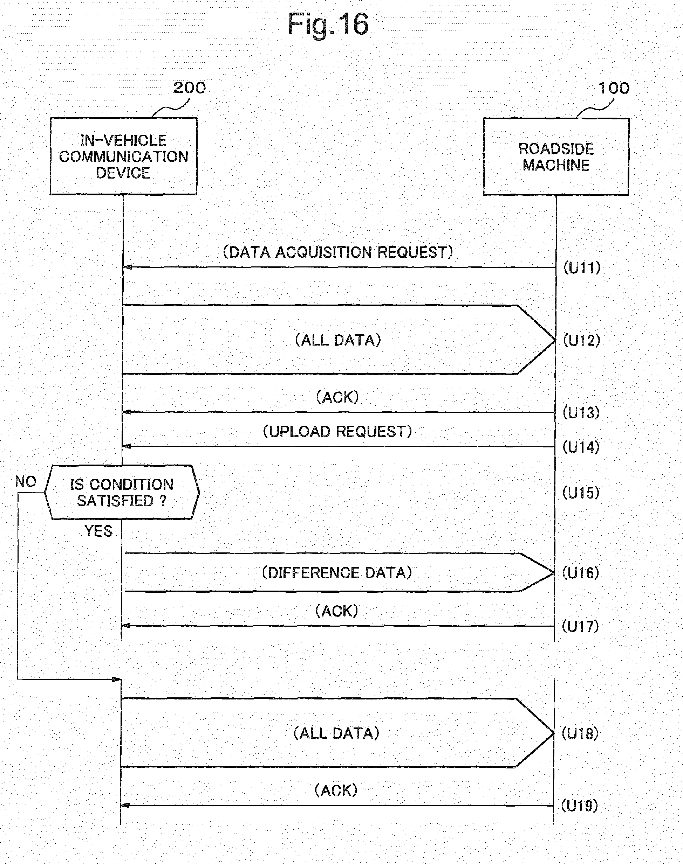

Next, operation of an entire wireless communication system 300a will be described. A sequence diagram showing an example of the operation of the wireless communication system 300a is shown in Fig. 16.

The roadside machine 100 transmits a first data acquisition request to the in-vehicle communication device 200 (step U11). The in-vehicle communication device 200 transmits the upload data including all the data to the roadside machine 100 (step U12). When the roadside machine 100 succeeds in the reception of the upload data, it transmits the ACK to the in-vehicle communication device 200 (step U13).

Further, the roadside machine 100 transmits a second data acquisition request to the in-vehicle communication device 200 (step U14).

The in-vehicle communication device 200 determines whether or not the condition is satisfied with respect to the three conditions explained in the third exemplary embodiment (step U15). When any one of the three conditions is satisfied (step U15: YES), the in-vehicle communication device 200 performs the difference data transmission process (step U16). When the roadside machine 100 succeeds in the reception of the download data, it transmits the ACK to the in-vehicle communication device 200 (step U17).

On the other hand, when all the three conditions are not satisfied (step U15: NO), the in-vehicle communication device 200 performs the all data transmission process (step U18). When the roadside machine 100 succeeds in the reception of the download data, it transmits the ACK to the in-vehicle communication device 200 (step U19).

Further, in this exemplary embodiment, a configuration in which in the wireless communication system, only the upload data is transmitted and received is used. However, a configuration in which in addition to the upload data, the download data is transmitted and received may be used.

Further, in this exemplary embodiment, the in-vehicle communication device 200 determines whether or not to transmit the data of the difference. However, it can be determined by the server which communicates with the roadside machine 100, a node which relays communication between the server and the roadside machine 100, or the like.

As described above, by using the exemplary embodiment, a wireless communication system 300B can realize maintenance of the service quality and reduction of the data amount simultaneously at the time of upload.

Further, by using the diagnostic information included in the upload data, the roadside machine 100 can provide careful service to a user based on a state in each vehicle. Therefore, the wireless communication system 300B according to the exemplary embodiment can further improve the service quality.

### (fifth exemplary embodiment)

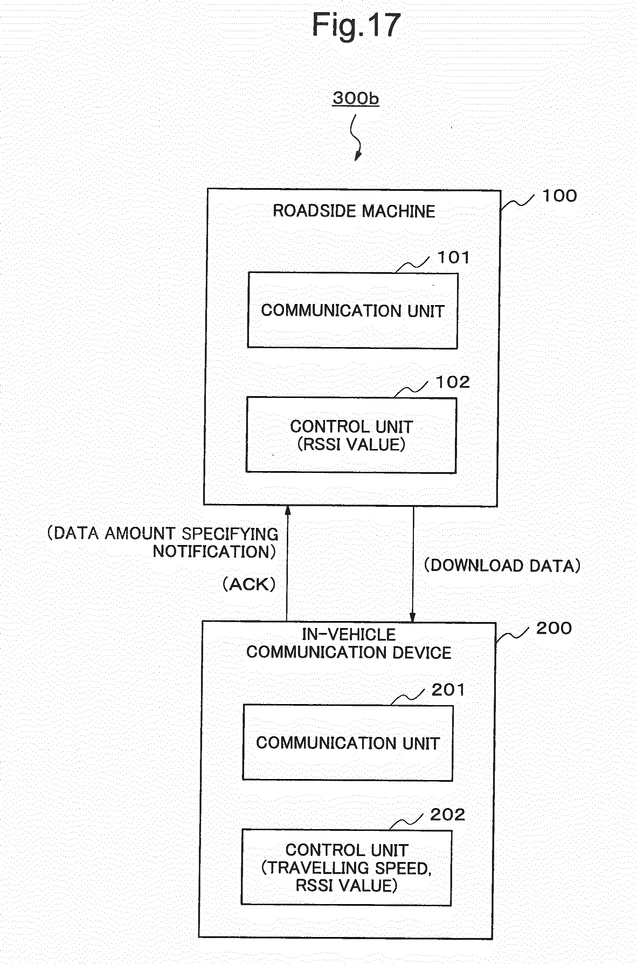

A fifth exemplary embodiment of the present invention will be described. An example of a system configuration diagram of a wireless communication system according to the exemplary embodiment is shown in Fig. 17. In the exemplary embodiment, the roadside machine 100 transmits the download data in response to a data amount specifying notification received from the in-vehicle communication device 200.

In the exemplary embodiment, the in-vehicle communication device 200 periodically measures the RSSI value and the travelling speed of the vehicle and transmits either the data amount specifying notification for specifying the transmission of the difference data or the data amount specifying notification for specifying the transmission of all the data to the roadside machine 100 according to the measurement result.

For example, when the RSSI value is lower than the threshold value or when the travelling speed is greater than the threshold value, the data amount specifying notification for specifying the transmission of the difference data is transmitted to the roadside machine 100. On the other hand, when the RSSI value is equal to or greater than the threshold value and the travelling speed is smaller than or equal to the threshold value, the data amount specifying notification for specifying the transmission of all the data is transmitted.

The roadside machine 100 periodically transmits the download data to the in-vehicle communication device 200. At a time to transmit the download data, the roadside machine 100 confirms a content of the data amount specifying notification which has been received by that time. When the transmission of the difference data is specified, the difference data transmission process is performed. On the other hand, when the transmission of all the data is specified, the all data transmission process is performed.

When the in-vehicle communication device 200 succeeds in the reception of the download data, it transmits the ACK to the roadside machine 100.

Next, the operation of the roadside machine 100, the in-vehicle communication device 200, and the system wireless communication system 300b will be described.

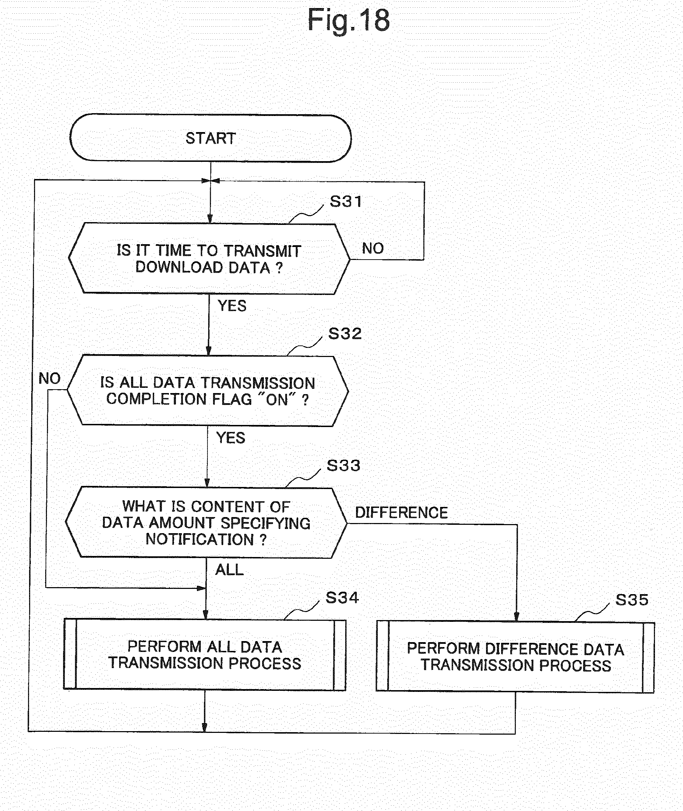

First, the operation of the roadside machine 100 will be described. A flowchart showing an example of the operation of the roadside machine 100 according to the exemplary embodiment is shown in Fig. 18.

In Fig. 18, the roadside machine 100 determines whether or not a current time is a time to transmit the download data (step S31). When it is the time to transmit the download data (step S31: YES), the roadside machine 100 determines whether or not an all data transmission completion flag is "ON" (step S32).

When the all data transmission completion flag is "ON" (step S32: YES), the roadside machine 100 confirms the content of the data amount specifying notification received from the in-vehicle communication device 200 (step S33).

When the all data transmission completion flag is "OFF" (step S32: NO) or when the content of the data amount specifying notification is "transmission of all the data" (step S34: all), the roadside machine 100 performs the all data transmission process (step S34).

On the other hand, when the content of the data amount specifying notification is "transmission of the difference data" (step S33: difference), the roadside machine 100 performs the difference data transmission process (step S35).

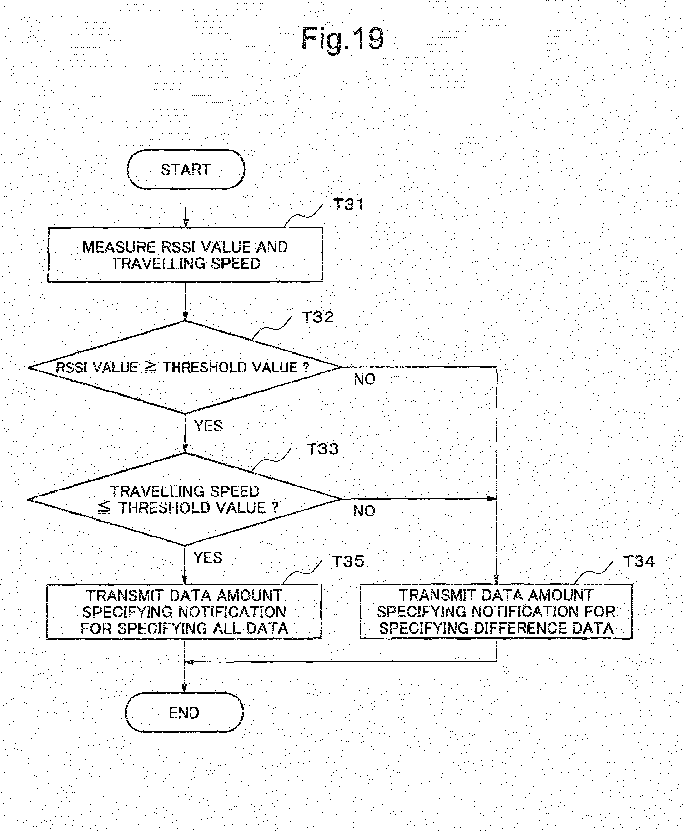

Next, the operation of the in-vehicle communication device 200 will be described. A flowchart showing an example of the operation of the in-vehicle communication device 200 is shown in Fig. 19.

The in-vehicle communication device 200 periodically measures the RSSI value and the travelling speed of the vehicle (step T31). When the measured RSSI value is equal to or greater than the threshold value (step T32: YES), the in-vehicle communication device 200 determines whether or not the travelling speed of the vehicle is smaller than or equal to the threshold value (step T33).

When the RSSI value is smaller than the threshold value (step T32: NO) or when the travelling speed is greater than the threshold value (step T34: NO), the in-vehicle communication device 200 transmits the data amount specifying notification for instructing the roadside machine 100 to transmit the difference data (step T34).

On the other hand, when the RSSI value is equal to or greater than the threshold value (step T33: YES) and the travelling speed is smaller than or equal to the threshold value (step T34: YES), the in-vehicle communication device 200 transmits the data amount specifying notification for instructing the roadside machine 100 to transmit all the data (step T35).

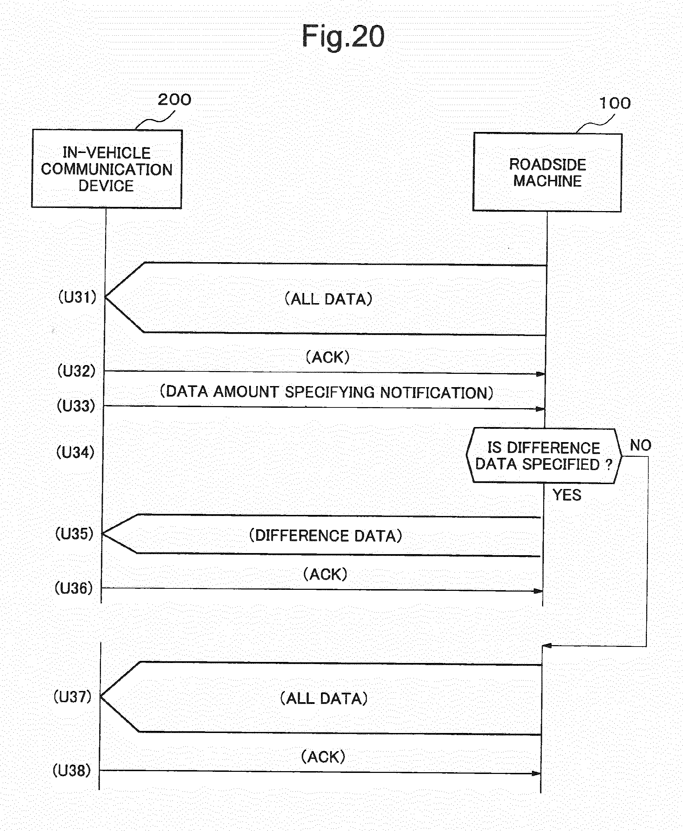

Next, the operation of the entire wireless communication system 300b will be described. A sequence diagram showing an example of the operation of the wireless communication system 300b is shown in Fig. 20.

When a time to transmit the download data has come, the roadside machine 100 transmits the download data to the in-vehicle communication device 200 (step U31). When the in-vehicle communication device 200 succeeds in the reception of the download data, it transmits the ACK to the roadside machine 100 (step U32).

The in-vehicle communication device 200 transmits the data amount specifying notification which specifies either all the data or the difference data according to the RSSI value and the travelling speed (step U33).

The in-vehicle communication device 200 confirms the content of the data amount specifying notification at a time to transmit the next download data (step U34). When the transmission of the difference data is specified by the data amount specifying notification (step U34: YES), the roadside machine 100 performs the difference data transmission process (step U35). When the in-vehicle communication device 200 succeeds in the reception of the download data, it transmits the ACK to the roadside machine 100 (step U36).

On the other hand, when the transmission of all the data is specified by the data amount specifying notification (step U35: NO), the all data transmission process is performed (step U37). When the in-vehicle communication device 200 succeeds in the reception of the download data, it transmits the ACK to the roadside machine 100 (step U38).

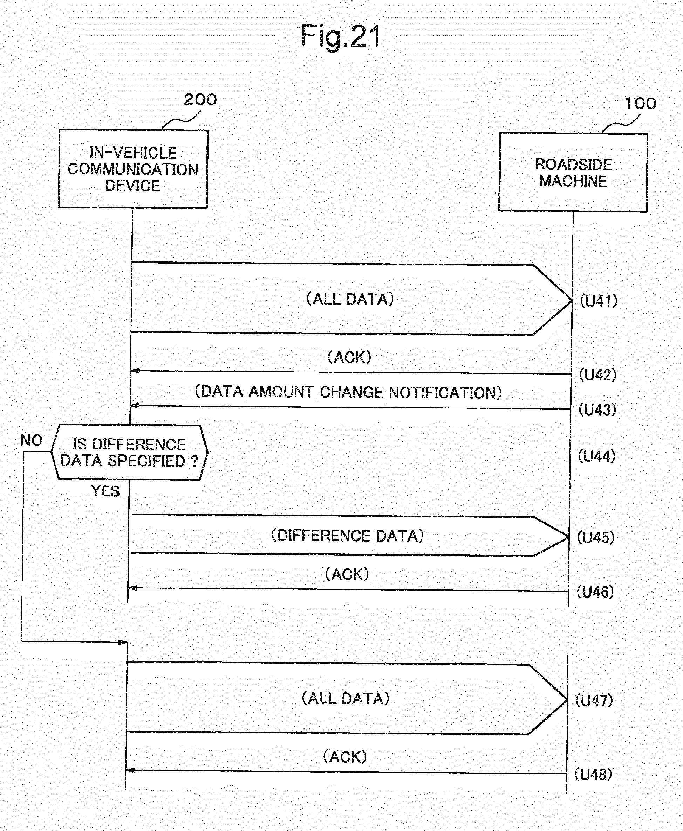

In the exemplary embodiment, the in-vehicle communication device 200 periodically measures the RSSI value and the travelling speed and transmits the data amount specifying notification. However, the roadside machine 100 can transmit the data amount specifying notification at the time of the uploaded of the data. An example of a sequence diagram showing a sequence to upload the data from the in-vehicle communication device 200 is shown in Fig. 21.

The data amount specifying notification may be transmitted only when the type of the data is changed from all the data to the difference data or from the difference data to all the data without periodically transmitting the data amount specifying notification.

The exemplary embodiment can be applied to a system and a communication device which autonomously transmit data.

### (Another exemplary embodiment)

A wireless communication system according to another exemplary embodiment includes a first wireless communication device and a second wireless communication device. The first wireless communication device manages the updated data, changes the data amount of the data according to a parameter about communication between the first wireless communication device and the second wireless communication device, and transmits the data to the second communication device. The second wireless communication device receives the data from the first wireless communication device and processes the data.

The wireless communication device includes change means for changing the data amount of the updated data according to the parameter about communication with a communication partner device and transmission means for transmitting the data having the data amount that is changed by the change means to the communication partner device.

In a method for controlling a wireless communication device according to another exemplary embodiment, a first wireless communication device that manages updated data changes a data amount of data according to a parameter about communication between the first wireless communication device and a second wireless communication device and transmits the data to the second communication device and the second communication device receives the data from the first wireless communication device and processes the data.

A program according to another exemplary embodiments causes a computer to execute a change step in which a data amount of updated data is changed according to a parameter about communication with a communication partner device and a transmission step in which the data whose data amount is changed in the change step is transmitted to the communication partner device.

The most preferred mode for carrying out the invention has been described above but it is only the example. Therefore, the present invention is not limited by the examples at all. Various changes can be made without departing from the scope of the invention.

This application claims priority based on Japanese Patent Application No. 2009-190096 filed on August 19th, 2009 and the disclosure of which is hereby incorporated by reference in its entirety.

### Industrial applicability

The communication system according to the present invention can be applied to a system including a plurality of communication devices for transmitting/receiving updated information in an environment in which communication quality changes. In particular, the communication system according to the present invention can be applied to the ITS, the VICS, or the like.

Furthermore, the communication device according to the present invention can be applied to a base station used for the ITS, the VICS, or the like, an in-vehicle communication device mounted on a vehicle, or the like.

### Description of symbol

1 communication device
2 communication unit
3 adjustment unit
4 control unit
10 communication system
20 first communication device
30 storage unit
40 communication unit
50 adjustment unit
60 control unit
70 second communication device
100 roadside machine
200 in-vehicle communication device
300, 300a, 300b wireless communication system
101 communication unit
102 control unit
201 communication unit
202 control unit

## Claims

1. A communication device comprising:
a communication unit for transmitting updated broadcast information;
an adjustment unit for adjusting an information amount of the broadcast information at a predetermined timing with priority on a part different from the broadcast information that has already been transmitted; and
a control unit for transmitting the broadcast information whose information amount has been adjusted at the predetermined timing via the communication unit.

2. The communication device according to claim 1, wherein the communication unit receives a predetermined index value and the adjustment unit adjusts the information amount based on the index value.

3. The communication device according to claim 2, wherein the predetermined timing is a time at which a transmission request for the broadcast information including the index value is received from a destination device.

4. The communication device according to claim 2 or 3 further comprising:
a storage unit for holding a predetermined threshold value;
wherein the index value is a received signal strength value, and
wherein the adjustment unit reduces the information amount when the received signal strength value is smaller than the threshold value and keeps it without any change when the received signal strength value is greater than the threshold value.

5. The communication device according to claim 4,
wherein the storage unit further holds a second threshold value,
wherein the communication unit further receives a travelling speed as a second index value, and
wherein the adjustment unit reduces the information amount when the travelling speed is greater than the second threshold value or when the received signal strength value is smaller than the threshold value, and keeps it without any change when the travelling speed is smaller than the second threshold value and the received signal strength value is greater than the threshold value.

6. The communication device according to any one of claims 1 to 5,
wherein the communication device is a roadside device which periodically acquires the latest broadcast information from a predetermined server and the broadcast information is traffic information.

7. The communication device according to any one of claims 1 to 4,
wherein the communication device is an in-vehicle communication device mounted on a moving vehicle and the broadcast information is information about the moving vehicle.

8. The communication device according to any one of claims 1 to 7,
wherein the control unit determines whether or not the broadcast information which has already been transmitted exists at the predetermined timing, transmits the broadcast information without any change at the predetermined when the broadcast information which has already been transmitted does not exist, and transmits the broadcast information after adjusting the information amount of the broadcast information at the predetermined timing when the broadcast information which has already been transmitted exists.

9. A communication system comprising:
a first communication device for transmitting updated broadcast information, adjusting an information amount of the broadcast information at a predetermined timing with priority on a part different from the broadcast information that has already been transmitted, and transmitting the broadcast information whose information amount has been adjusted at the predetermined timing; and
a second communication device for receiving the broadcast information from the first communication device.

10. A communication method comprising:
transmitting updated broadcast information;
adjusting an information amount of the broadcast information at a predetermined timing with priority on a part different from the broadcast information that has already been transmitted; and
transmitting the broadcast information whose information amount has been adjusted at the predetermined timing.
